(19)

**Europäisches Patentamt**

**European Patent Office**

**Office européen des brevets**

(11) **EP 3 202 552 B1**

(12) **EUROPEAN PATENT SPECIFICATION**

(45) Date of publication and mention
of the grant of the patent:
**30.08.2023 Bulletin 2023/35**

(21) Application number: **15863912.0**

(22) Date of filing: **24.11.2015**

(51) International Patent Classification (IPC):
*A01N 25/34* (2006.01)   *A01N 59/16* (2006.01)
*A01P 1/00* (2006.01)   *D21H 17/70* (2006.01)
*D21H 21/36* (2006.01)   *B32B 37/02* (2006.01)

(52) Cooperative Patent Classification (CPC):
(C-Sets available)
**B32B 37/025; A01N 25/34; A01N 59/16;
A01P 1/00; B29C 61/06; B32B 27/18; B32B 38/10;
D21H 17/73; D21H 21/36**            (Cont.)

(86) International application number:
**PCT/JP2015/082862**

(87) International publication number:
**WO 2016/084774 (02.06.2016 Gazette 2016/22)**

(54) **METHODS FOR PRODUCING ANTIVIRAL TRANSFER SHEET AND ANTIVIRAL SHRINK FILM**

VERFAHREN ZUR HERSTELLUNG VON ANTIVIRALEN ÜBERTRAGUNGSFOLIEN UND
ANTIVIRALEN SCHRUMPFFOLIEN

PROCÉDÉS POUR LA PRODUCTION DE FEUILLE DE TRANSFERT ANTIVIRALE ET FILM
RÉTRACTABLE ANTIVIRAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.11.2014   JP 2014238161
25.11.2014   JP 2014238162**

(43) Date of publication of application:
**09.08.2017   Bulletin 2017/32**

(73) Proprietor: **Nissha Printing Co., Ltd.
Kyoto-shi, Kyoto 604-8551 (JP)**

(72) Inventors:
• **KUBOSAKI Nobuo
Kyoto-shi
Kyoto 604-8551 (JP)**
• **MORI Ryosuke
Kyoto-shi
Kyoto 604-8551 (JP)**
• **HAMA Daichi
Kyoto-shi
Kyoto 604-8551 (JP)**

• **YAMAUCHI Yuji
Kyoto-shi
Kyoto 604-8551 (JP)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(56) References cited:
**WO-A1-2011/040048      WO-A1-2014/141600
WO-A1-2014/141600      JP-A- H0 921 255
JP-A- H09 316 369      JP-A- H09 316 369**

EP 3 202 552 B1

(52) Cooperative Patent Classification (CPC): (Cont.)

C-Sets
**A01N 25/34, A01N 59/16, A01N 59/20;**
**A01N 59/16, A01N 59/20**

**Description**

TECHNICAL FIELD

The present invention relates to an antiviral transfer sheet manufacturing method and to an antiviral shrink film manufacturing method.

BACKGROUND ART

From the viewpoint of hygiene, it is desirable to impart antiviral or antibacterial property to articles that come into contact with the hand of someone, particularly the hands of an unspecified number of people. A functional layer may be installed on the surface of a transferred item by transferring a transfer sheet including the functional layer onto a transferred base material. An example of the function of the functional layer is antiviral property. A shrink film including a functional layer may be used for providing an article with a functional coat. An example of the function of the functional layer is antiviral property.

Conventionally, an antibacterial transfer sheet is known. For example, an antibacterial transfer sheet is known in which an active energy ray-curable composition is positioned in layer form on a basic sheet, on which there are further laminated a picture layer and an adhesive layer (see JP-A-2012-158116).

The active energy ray-curable composition of the transfer sheet is composed of a surface energy activator in addition to a photo-curable compound and an inorganic antibacterial agent. The surface energy activator, when sebum including bacteria has become attached to a hard coat layer, acts on the sebum so as to expand the area of contact between the sebum and the hard coat layer. In this way, the working efficiency of the inorganic antibacterial agent per unit is increased.

If, in order to further increase the antibacterial capability of the transfer sheet, the amount of the inorganic antibacterial agent that becomes positioned on the surface of the transfer object after transfer is to be increased, the amount of the inorganic antibacterial agent would have to be uniformly increased even inside the active energy ray-curable composition layer. Antibacterial agents are an expensive material. In addition, antibacterial agents are also a material that adversely affects the transparency of the active energy ray-curable composition layer in which the agent has been mixed.

Accordingly, increasing the density of the inorganic antibacterial agent in the active energy ray-curable composition layer results in a more expensive transfer sheet. In addition, the visibility of a display and the like drawn on the picture layer decreases. A decrease in visibility leads to a decrease in the appeal of the article derived from the display and the like.

Also, a conventional shrink film having antibacterial property is known. For example, a shrink film is known which is manufactured by molding a resin and the like having an antibacterial agent kneaded therein into a film (see, for example, JP-A-10-330507). Another shrink film is known which is manufactured by coating an antibacterial agent onto the surface of a film base material having shrink property (see, for example, JP-A-9-21255).

However, in the case of the film manufactured by incorporating an antibacterial agent by kneading, if the amount of the antibacterial agent present on the upper-most layer of the film is to be increased to enhance antibacterial capability, it also becomes necessary to uniformly increase the amount of the antibacterial agent in the film. Antibacterial agents are an expensive material. Antibacterial agents are also a material that adversely affects the transparency of the film. Accordingly, if the amount of antibacterial agent in the upper-most layer of the film is increased, the shrink film becomes more expensive. In addition, transparency decreases. A decrease in the transparency of the shrink film covering the upper layer of an article leads to a decrease in the appeal of the article, or adversely affects the aesthetic appearance of the article.

In the case of the shrink film manufacturing method where antibacterial agent is applied to the film base material, if an application liquid including antibacterial agent and solvent is applied to the film base material, solvent shock may be caused, curling the film base material. If the application liquid is thickly applied so as to increase the antibacterial agent density in the finished shrink film, the curl may increase in size, or the frequency of curling may be increased.

JP H09 316369 A describes an antibacterial clear film that is obtained by forming an antibacterial layer comprising a carboxylated (meth)acrylate resin and ultrafine zinc oxide particles dispersed therein as antibacterial ultrafine particles on a clear plastic film substrate. The zinc oxide particles have particle sizes of 10-500nm, and the amount of the particles dispersed is. 5-600 pts.wt. per 100 pts.wt. resin. The antibacterial film is, for instance, stuck to a touch panel with an adhesive layer to form the surface layer of the panel.

WO 2014/141600 A1 describes a copper complex titanium oxide dispersion liquid containing titanium oxide particles and 0.1-20 parts by mass of cuprous oxide particles per 100 parts by mass of the titanium oxide particles. The dispersion liquid additionally contains 5-100 parts by mass of a phosphoric acid ester-type anionic surfactant per 100 parts by mass of the total of the titanium oxide particles and the cuprous oxide particles, and 300-2,000 parts by mass of an organic solvent per 100 parts by mass of the total of the titanium oxide particles and the cuprous oxide particles.

WO 2011/040048 A1 describes a virus inactivation sheet that can inactivate viruses adhering to said sheet regardless of the existence of an envelope, or the presence of lipids or proteins. The virus inactivation sheet can inactivate viruses adhering thereto, and is characterized by having a sheet body, and univalent copper compound microparticles and/ or iodide microparticles retained on the sheet body. The virus inactivation sheet can inactivate a variety of viruses and can inactivate said viruses even in the presence of lipids and proteins.

SUMMARY OF THE INVENTION

It is an object of the present invention to provide an improved antiviral transfer sheet manufacturing method, and an improved antiviral shrink film manufacturing method.

This object is achieved by an antiviral transfer sheet manufacturing method according to claim 1, and an antiviral shrink film manufacturing according to claim 4.

A problem of an antiviral transfer sheet manufacturing method to be solved by the present invention concerns the need for a large amount of antiviral agent and the like, and the opacity of the layer having antiviral function, which are associated with the implementation of a manufacturing method intended to increase the density of the antiviral agent or antibacterial agent in a surface which becomes an upper-most layer after transfer. Another problem to be solved by the present invention concerns the need for a large amount of an antiviral agent and the like, and the opacity of the layer having antiviral function, which are associated with an attempt to increase, in an antiviral transfer sheet, the density of antiviral agent and the like in a surface which becomes an upper-most layer after transfer.

In the present invention and the present description, an "antiviral transfer sheet" refers to a transfer sheet for creating a transferred item by providing a transferred surface of a transferred base material with an antiviral or antibacterial property.

An additional problem of an antiviral shrink film manufacturing method to be solved by the present invention concerns the need for a large amount of an antiviral agent and the like, a decrease in shrink film transparency, and a curl which are associated with an attempt to increase the density of antiviral agent and the like in an upper layer of a shrink film. Another problem to be solved by the present invention concerns the need for a large amount of an antiviral agent and the like, and the opacity of the layer having antiviral function which are associated with an attempt to increase, in an antiviral shrink film, the density of antiviral agent and the like in a surface of the shrink film.

Other problems to be solved by the present invention will become apparent from the following description of the present invention.

In the following, means for solving the problems will be set forth. For ease of understanding, the description will be accompanied by reference signs corresponding to the embodiments of the present invention. It should be noted, however, that the present invention is not limited to the embodiments. Numerals serving as reference signs may refer to a component and the like collectively.

According to a preferred embodiment of the present invention, the inorganic antiviral agent powder used in the antiviral transfer sheet manufacturing method may contain a mixture of a titanium oxide powder and a cuprous oxide (copper oxide (I): $Cu_2O$) powder.

In a preferred embodiment of the present invention, after the functional layer is formed, a picture layer may be formed on the functional layer, and the adhesive layer may be formed on the picture layer.

In the antiviral shrink film manufacturing method according to an embodiment of the present invention, the pressure applied to the laminate may be 0.3 MPa to 1.2 MPa, and the heat applied to the laminate may be 170°C to 210°C.

The present invention, the preferred embodiments of the present invention, and the constituent elements included therein may be implemented in any possible combination.

EFFECTS OF THE INVENTION

According to the antiviral transfer sheet manufacturing method of the present invention, a transfer sheet that includes an antiviral agent locally present in the surface which becomes an upper-most layer after transfer is manufactured. Most of the antiviral agent contained in the manufactured transfer sheet is positioned at positions where antiviral action can be exerted. Accordingly, the advantage of saving the antiviral agent is obtained. In addition, the degree of the transparency of the functional layer being adversely affected by the antiviral agent can be reduced. Accordingly, the advantage of being able to maintain the transparency of the functional layer is obtained.

In an antiviral transfer sheet manufactured according to the present invention, the antiviral agent effective particles in the surface which becomes an upper-most layer after transfer have an occupied ratio in a specific value range. Accordingly, the advantage of effective functioning of a number of particles in the contained antiviral agent particles can be obtained. Thus, the advantage of saving the antiviral agent can be obtained. In addition, the degree of the transparency of the functional layer being adversely affected by the antiviral agent can be decreased. Accordingly, the transparency of the functional layer can be maintained. Another advantage that is obtained is that of being able to maintain satisfactory visibility of the transferred item upper layer of the transferred item, which is the product obtained as a result of transferring the transfer sheet. Another advantage obtained is that, when the transfer sheet is provided with a picture layer, a satisfactory visibility of the picture layer can be maintained.

According to the antiviral shrink film manufacturing method of the present invention, an antiviral shrink film is manufactured by transferring, onto a shrink base material, an antiviral transfer sheet manufactured by the antiviral transfer sheet manufacturing method of the present invention. Accordingly, the advantage of being able to manufacture an antiviral shrink film which includes the antiviral agent powder locally present in the surface and has a smooth surface can be obtained. In addition, according to the antiviral shrink film manufacturing method of the present invention, no curl is caused in the antiviral shrink film. Accordingly, the advantage of easy manufacturing operation during manufacturing can be obtained. In addition, the advantage of increased quality of the manufactured antiviral shrink film is obtained.

In addition, the antiviral shrink film manufacturing method of the present invention has the advantage of being a simple manufacturing method of transferring a transfer sheet. There is also obtained the advantage that, even when a press-heat processing is performed to transition the transfer layer of the transfer sheet onto the shrink base material, the shrink processability of the shrink base material can be left in the antiviral shrink film.

An antiviral shrink film manufactured according to the present invention has the advantage of localized presence of the antiviral agent in the surface, and the advantage that a number of particles among the antiviral agent powder particles are positioned at positions where antiviral capability can be exerted. Accordingly, the advantage is obtained that, as the amount of the antiviral agent required for providing the antiviral shrink film with a certain antiviral performance is decreased, the transparency of the functional layer stays in an appropriate range.

BRIEF DESCRIPTION OF THE DRAWINGS

Fig. 1 is a cross sectional view schematically illustrating a configuration of an antiviral transfer sheet.
Fig. 2 is a cross sectional view schematically illustrating a configuration of a transferred item which is obtained as a result of transferring an antiviral transfer sheet.
Fig. 3 is a cross sectional view schematically illustrating a configuration of an antiviral shrink film.
Fig. 4 is a figure schematically illustrating an antiviral shrink film manufacturing method.

DESCRIPTION OF THE EMBODIMENTS

In the following, an antiviral transfer sheet manufacturing method according to embodiments of the present invention, an antiviral transfer sheet, an antiviral shrink film manufacturing method according to embodiments of the present invention, and, an antiviral shrink film will be further described with reference to the drawings. In the drawing figures that will be referenced in the present description, some of the constituent elements may be schematically depicted in an exaggerated manner, for example, for facilitating an understanding of the present invention. Accordingly, the relative sizes, ratios and the like of the constituent elements may differ from those of an actual product. In addition, the sizes, materials, shapes, relative positions and the like of the members or portions described with reference to the examples of the present invention are not intended to limit the scope of the invention thereto unless otherwise specifically noted. The examples are merely illustrative examples.

In the present invention and the present description, the term "antiviral" is a general term for antiviral and antibacterial. The term "antibacterial" is also a general term for antiviral and antibacterial. Unless otherwise specifically noted, antiviral and antibacterial may each independently refer to both.

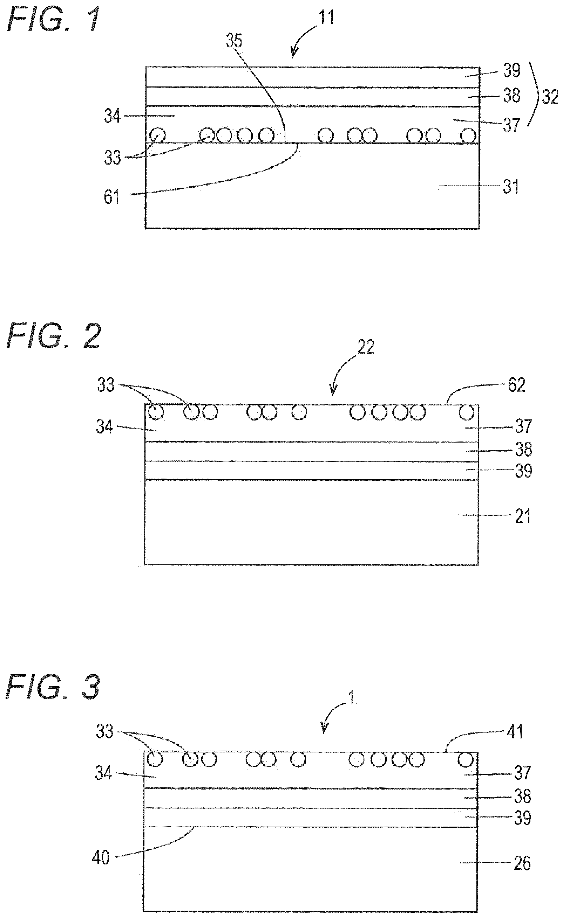

With reference to Fig. 1, an antiviral transfer sheet manufacturing method and a configuration and the like thereof will be described. An antiviral transfer sheet 11 may be referred to as a transfer sheet 11.

The transfer sheet 11 includes a transfer layer 32 disposed on one surface of a base material sheet 31. The transfer layer 32 includes a functional layer 37, a picture layer 38, and an adhesive layer 39. The functional layer 37 is disposed in contact with one surface 61 of the base material sheet 31. The functional layer 37 is disposed on the base material sheet 31. The adhesive layer 39 is disposed as an upper-most layer of the transfer layer 32. The adhesive layer 39 is disposed as an upper-most layer of the transfer sheet 11.

The functional layer 37 is located under the picture layer 38, and the adhesive layer 39 is located over the picture layer 38. The functional layer 37 and the picture layer 38 may contact each other. Between these layers, another layer may also be present. The picture layer 38 and the adhesive layer 39 may contact each other. Between these layers, another layer may be present.

The functional layer 37 includes an antiviral agent powder 33 and a hard coat agent 34. The antiviral agent powder 33 is a powder of an inorganic antiviral agent as will be described later.

An antiviral transfer sheet manufacturing method will be described. First, the antiviral agent powder 33 is disposed on the surface 61 of the base material sheet 31. The antiviral agent powder is disposed by applying a suspension of organic solvent containing the powder, and later removing the organic solvent. Alternatively, the antiviral agent powder may be disposed by applying a suspension of organic solvent containing the powder and a small amount of hard coat agent, and later removing the organic solvent.

Then, the hard coat agent 34 is positioned on the antiviral agent powder 33. By this operation, the functional layer 37 is formed. The hard coat agent may be positioned by various methods, such as coating, dispersing in mist, and printing.

Over the functional layer 37 thus formed, the picture layer 38 and the adhesive layer 39 are laminated in that order. The picture layer 38 and the adhesive layer 39 may be formed by the same method as the method by which a picture layer and an adhesive layer of a known transfer sheet are formed. The picture layer 38 of the transfer sheet 11 is a selective constituent element. The picture layer 38 may or may not be provided. Between the functional layer 37 and the picture layer 38, between the picture layer 38 and the adhesive layer 39, or between the functional layer and the adhesive layer, an anchor layer and the like may be provided as needed.

By transferring the transfer sheet 11 thus manufactured onto a transferred base material, a transferred item can be provided with antiviral property.

Fig. 2 is a schematic cross sectional view of a transferred item 22 manufactured by transferring the transfer sheet 11 onto a transferred base material 21. Referring to Fig. 2, the adhesive layer 39 is in contact with the transferred base material 21. On the adhesive layer 39, the picture layer 38 is present. On the picture layer 38, the functional layer 37 is present. The picture layer provides the transferred item 22 with an appeal deriving from a picture.

When the picture layer is absent, the design of the upper layer of the transferred base material is observed even on the transferred item through the transfer layer. If the transfer layer is black and the like and does not transmit light, for example, the transferred item has the appearance of the transfer layer per se.

The functional layer 37 is positioned in the upper-most layer of the transferred item 22. An exposed surface 62 of the functional layer 37 is in contact with the external environment.

The antiviral agent powder 33 of the functional layer 37 exerts its function when exposed. If the antiviral agent powder is buried in the functional layer 37, the function will not be exerted. The function will not be exerted, either, if the antiviral agent powder is positioned in the vicinity of the rear surface (on the opposite side from the exposed surface 62) of the functional layer 37.

The exposed surface 62 of the transferred item 22 is a surface derived from a boundary surface 35 of the functional layer in the antiviral transfer sheet 11.

The localized presence state of the antiviral powder in the functional layer 37 will be described. The area ratio of the antiviral agent powder to the area of the boundary surface 35 expressed in percentage is defined as a "contact-effective powder-occupied percentage". The definition and method for calculating the "contact-effective powder-occupied percentage" will be described in the following.

Among the individual particles of the antiviral agent powder 33, the particles of which a part of the particle surface is in contact with the boundary surface 35 are defined as contact-effective powder particles. The boundary surface 35 of the functional layer is a surface via which the functional layer 37 contacts the surface 61 of the base material sheet 31. Further, the area of the boundary surface which is in contact with the contact-effective powder particles will be referred to as independent contact area. The independent contact area is denoted as AR-T.

A certain section of the boundary surface 35 will be considered. The certain section is a single continuous surface. For example, the certain section is a section demarcated by a single square drawn on the boundary surface 35. The area of the certain section is referred to as AROBS.

Suppose the number of the contact-effective powder particles present in the certain section is n. A total of n individual independent contact areas AR-T is calculated to determine a total contact area. The total contact area will be referred to as ΣAR-T.

The contact-effective powder-occupied percentage, referred to as OCC-T%, is expressed by the following expression (1).

$$\text{OCC-T\%} = \Sigma\text{AR-T} / \text{AROBS} \times 100 \qquad (1)$$

However, because the antiviral powder particles are fine, it is difficult to accurately measure the independent contact area. It is also difficult to accurately calculate the contact-effective powder-occupied percentage. Accordingly, the contact-effective powder-occupied percentage is determined by a simplified method as will be described below.

By transferring the antiviral transfer sheet onto the transferred base material, a transferred specimen is prepared. In the transferred specimen, the boundary surface of the transfer sheet is positioned on the upper-most layer. Accordingly, the boundary surface is exposed.

**EP 3 202 552 B1**

A magnified image of the exposed surface is obtained using a scanning electron microscope. In the magnified image, a square with a side of 700 nm (nanometers) in actual size in the specimen is considered to be an observation object. Each of two mutually perpendicular sides of the square as the observation object is divided into 17 parts. Lines are drawn from the division points to divide the observation object square into 289 small sections. Each of the small sections is a square.

The small sections are observed. Then, the contact area of the contact-effective powder particles present in the small section, and the area of the small section are compared. In this way, the contact area in the small section is determined on a scale of 11 levels of 1, 0.9, 0.8, 0.7, 0.6, 0.5, 0.4, 0.3, 0.2, 0.1, and 0. Specifically, if the contact surface (area) extends throughout the surface of the small section, the small section is determined to have a determination value of 1. If the contact area is one half the small section area, the small section is determined to have a determination value of 0.5. If there is no contact surface (area) in the small section, the small section is determined to have a determination value of 0.

All of the 289 small sections are observed. By making the determination for all of the small sections, determination values are given. Thereafter, the total value of the 289 determination values is calculated according to the following expression (2).

$$\text{“contact-effective powder-occupied percentage”} = \text{total value of determination}$$

$$\text{values} / 289 \times 100 \qquad (2)$$

On the exposed surface (the surface derived from the boundary surface 35) of the transferred specimen, the contact-effective powder-occupied percentages for three different observation object squares are calculated. The length of a side of each of the observation object squares is 700 nm (nanometers) in actual size of the transferred specimen. Three calculated values are obtained. Then, an average value of the three calculated values is determined. The average value is defined as the contact-effective powder-occupied percentage of the antiviral transfer sheet.

In the antiviral transfer sheet, the contact-effective powder-occupied percentage according to the simplified method (determined according to expression (2)) is not less than 50% and not more than 80%.

By the above-described simplified method, a magnified image of the boundary surface may be obtained through the base material sheet of the antiviral transfer sheet. Then, in the magnified image, the contact-effective powder-occupied percentage may be calculated by the same determination method from an observation object square with a side of 700 nm (nanometers) in actual size.

Thus, the antiviral agent powder particles 33 are positioned in the functional layer in a state such that a number of the particles can exert their antiviral capability. In the transfer layer after transfer, the amount of antiviral agent powder required to exert antiviral power of certain capability is decreased. For the same reason, as the amount of antiviral agent powder included in the functional layer decreases, the transparency of the functional layer can be maintained in an appropriate range.

Meanwhile, the contact-effective powder particles are partly surrounded by the hard coat agent, whereby the contact-effective powder particles are strongly fixedly attached to the functional layer. Accordingly, the functional layer after transfer is placed on the upper layer of the article. As a result, even when the exposed surface 62 is contacted by a human finger and the like, the antiviral agent powder will not fall off.

Gaps of the antiviral agent powder are filled with the hard coat agent. Accordingly, the surface of the functional layer 37, i.e., the exposed surface 62 of the transferred item 22, is smooth. The functional layer has a total light transmittance of not less than 88%, and a haze of not more than 3%.

The total light transmittance is measured in accordance with JIS K 7361 (testing method for total light transmittance of plastic-transparent materials). Haze is measured in accordance with JIS K 7136 (method for determining the haze of plastic-transparent materials).

Using the antiviral transfer sheet, an antiviral molded article may be manufactured according to an in-mold injection molding process. The antiviral transfer sheet may also be transferred onto the transferred base material using a transfer machine, such as a roll transfer machine or an up-down transfer machine. Examples of the transferred base material include resin molded articles, shrink base materials, rubber products, metal products, wood products, glass products, and composite products of ceramics products or various materials.

An in-mold injection molding process will be described. First, the antiviral transfer sheet is installed in molding dies. The antiviral transfer sheet is aligned in a direction such that the base material sheet faces the die cavity surface.

Then, the dies are closed, and molten resin is filled into the cavity of the dies so that the molten resin contacts the adhesive layer of the antiviral transfer sheet. As a result, the molten resin is molded, while the antiviral transfer sheet is adhered onto the surface of the injection molding. After the resin is cooled or allowed to cool, the dies are opened and the injection molding is extracted where the transfer layer is adhered to the surface of the injection molding. Thereafter, the base material sheet is removed from the injection molding.

A method for manufacturing the antiviral shrink film and a configuration thereof, for example, will be described. The antiviral shrink film manufacturing method is a manufacturing method involving a transfer of the antiviral transfer sheet onto the shrink base material. The antiviral transfer sheet includes an antiviral transfer sheet manufactured by the antiviral transfer sheet manufacturing method according to the present invention. The antiviral shrink film 1 may be referred to as the shrink film 1 for short.

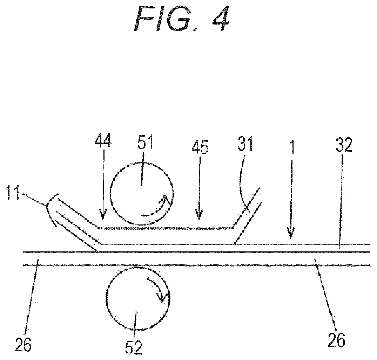

Fig. 4 is a figure schematically illustrating the antiviral shrink film manufacturing method. The transfer sheet 11 is laminated on one surface of the shrink base material 26 to make a base material laminated body 44. In the base material laminated body 44, the shrink base material 26 and the transfer layer 32 of the transfer sheet 11 face each other. In the base material laminated body 44, the adhesive layer contacts the shrink base material 26.

The base material laminated body 44 is passed between a press-heat roll 51 and a backing roll 52. During the passage, part of the heated molten resin of the adhesive layer 39 is melted and then solidified, whereby a boundary surface 40 between the surface of the shrink base material 26 and the adhesive layer 39 is fused. In this way, a base material transfer body 45 including the shrink base material 26 and the transfer sheet 11 is prepared.

By removing the base material sheet 31 from the base material transfer body 45, the shrink film 1 is obtained.

The temperature condition during transfer is normally 170°C to 210°C and preferably 180°C to 200°C. When the temperature is in this range, the resin of the adhesive layer sufficiently melts. Accordingly, satisfactory transfer can be performed. In addition, the shrink-processability of the shrink base material can be left in the shrink film 1.

The pressure condition during transfer is normally 0.3 MPa to 1.2 MPa and preferably 0.4 MPa to 0.8 MPa. When the pressure is in this range, satisfactory heat conduction can be obtained. As a result, the resin of the adhesive layer can be melted to an appropriate degree, and satisfactory transfer can be performed. In addition, the shrink-processability of the shrink base material can be left in the shrink film 1.

The time of application of press-heating can be expressed by the relative speed of movement of the laminate and the press-heat roll. The application time is 0.5 m/min to 4.0 m/min. If the speed is less than 0.5 m/min, the shrink-processability of the manufactured shrink film 1 may deteriorate. If the speed is more than 4.0 m/min, heat conduction may be decreased. As a result, the resin of the adhesive layer may fail to be sufficiently melted, and transfer failure may be caused.

The shrink film 1 manufactured according to the manufacturing method of the present invention was covered on a door knob. This was followed by a process of blowing hot air. The shrink film was shrunk so as to conform to the shape of door knob, whereby the shrink film was mounted on the door knob. Even when the press-heat processing for transferring the transfer sheet 11 onto the shrink base material 26 is performed, the shrink-processability of the shrink base material 26 is left in the shrink film 1.

Referring to Fig. 3, the adhesive layer 39 is positioned in the shrink film 1 according to the present invention in such a way as to adjoin one surface of the shrink base material 26. On the adhesive layer 39, the picture layer 38 is positioned, and further on the picture layer 38, the functional layer 37 is positioned. The picture layer 38 of the shrink film 1 according to the present invention is a selective constituent member. Accordingly, the picture layer 38 may or may not be present.

When the picture layer is provided, the mounted body of the shrink film 1 is provided with an appeal derived from the picture. On the other hand, when the picture layer is absent, the original appearance of the mounted body of the shrink film 1 is retained.

The functional layer 37 is positioned in the upper layer of the shrink film 1. The exposed surface 41 of the functional layer 37 is in contact with the external environment. The exposed surface 41 is one surface of the shrink film 1. The exposed surface 41, when the shrink film 1 is mounted on the mounted body, is also the face positioned on the surface of the mounted body. The other surface of the shrink film 1 is a face in contact with the external environment of the shrink base material.

The functional layer 37 includes the antiviral agent powder 33 and the hard coat agent 34. The antiviral agent powder 33 is locally present in the vicinity of the exposed surface 41 in contact with the external environment.

The localization of the antiviral agent powder 33 in the functional layer 37 of the shrink film 1 will be described. The area ratio of the antiviral agent powder to the area of the exposed surface 41 expressed in percentage is defined as an "effective exposed powder-occupied percentage". The definition and a method for calculating the "effective exposed powder-occupied percentage" will be described.

Among the individual particles of the antiviral powder 33, the particles of which the particle surface is partly exposed on the exposed surface 41 are defined as effective exposed powder particles. The exposed surface 41 is the surface of the functional layer 37 that is in contact with the external environment. In addition, the area of the exposed surface in which the effective exposed powder particles are exposed is defined as an independent exposed area. The independent exposed area is referred to as AR-E.

A certain section of the exposed surface 41 is considered. The certain section is a single continuous surface. For example, the certain section is a section demarcated by a single square drawn on the exposed surface 41. The certain section has an area AROBS.

The number of effective exposed powder particles in the certain section is expressed by n. A total of n individual independent exposed areas AR-E is calculated, and a total exposed area is determined. The total exposed area is expressed by $\Sigma$AR-E.

When the effective exposed powder-occupied percentage is referred to as OCC-E%, the percentage is expressed by the following expression (3).

$$OCC\text{-}E\% = \Sigma AR\text{-}E \,/\, AROBS \times 100 \qquad (3)$$

However, because the antiviral powder particles are fine, it is difficult to accurately measure the independent exposed area. It is also difficult to accurately calculate the exposed-effective powder-occupied percentage. Accordingly, the exposed-effective powder-occupied percentage is determined by a simplified method as will be described below.

A magnified image of the surface of the antiviral shrink film is obtained using a scanning electron microscope. The surface is an exposed surface of the functional layer. In the magnified image, a square with a side of 700 nm (nanometers) in actual size of the shrink film in the specimen is considered to be an observation object. Each of two mutually perpendicular sides of the square as the observation object is divided into 17 parts. Lines are drawn from the division points to divide the observation object square into 289 small sections. Each of the small sections is a square.

The small sections are observed. Then, the exposed area of the exposed-effective powder particles present in the small section, and the area of the small section are compared. In this way, the exposed area in the small section is determined on a scale of 11 levels of 1, 0.9, 0.8, 0.7, 0.6, 0.5, 0.4, 0.3, 0.2, 0.1, and 0. Specifically, if the exposed surface (area) extends throughout the surface of the small section, the small section is determined to have a determination value of 1. If the exposed area is one half the small section area, the small section is determined to have a determination value of 0.5. If there is no exposed surface (area) in the small section, the small section is determined to have a determination value of 0.

All of the 289 small sections are observed. By making the determination for all of the small sections, determination values are given. Thereafter, the total value of the 289 determination values is calculated according to the following expression (4).

$$\text{"contact-effective powder-occupied percentage"} = \text{total value of determination}$$

$$\text{values} \,/\, 289 \times 100 \qquad (4)$$

On the exposed surface 41 of the antiviral shrink film, the exposed-effective powder-occupied percentages for three different observation object squares are calculated. The length of a side of each of the observation object squares is 700 nm (nanometers) in actual size of the transferred specimen. Three calculated values are obtained. Then, an average value of the three calculated values is determined. The average value is defined as the exposed-effective powder-occupied percentage of the antiviral shrink film.

In the antiviral shrink film, the exposed-effective powder-occupied percentage according to the simplified method (determined according to expression (4)) is not less than 50% and not more than 80%.

Thus, the antiviral agent powder particles 33 are positioned in the functional layer in a state such that a number of the particles can exert their antiviral capability in the antiviral shrink film 1. Accordingly, in the antiviral shrink film 1, the amount of antiviral agent powder required to exert antiviral power of certain capability is decreased. For the same reason, as the amount of antiviral agent powder included in the functional layer decreases, the transparency of the functional layer can be maintained in an appropriate range.

Meanwhile, the exposed-effective powder particles are partly surrounded by the hard coat agent, whereby the exposed-effective powder particles are strongly fixedly attached to the functional layer. Accordingly, the antiviral shrink film 1 is placed on the upper layer of the article. As a result, even when the exposed surface 41 is contacted by a human finger and the like, the antiviral agent powder will not fall off.

The exposed surface of the functional layer 37 is smooth. That is, the surface of the shrink film 1 is smooth, and therefore the surface of the shrink film mounted body is smooth.

The materials of the layers and a method for forming the same and the like will be described.

<Inorganic antiviral agent>

Examples of the inorganic antiviral agent include photocatalyst materials, metal ions in which metal ion is carried on an ion exchanger, and antibacterial ceramics.

Examples of the photocatalyst material include oxides such as titanium oxide, tin oxide, tungsten oxide, iron oxide, zinc oxide, chromium oxide, molybdenum oxide, ruthenium oxide, germanium oxide, lead oxide, cadmium oxide, vanadium oxide, niobium oxide, tantalum oxide, manganese oxide, cobalt oxide, rhodium oxide, nickel oxide, rhenium oxide, and zirconium oxide; oxides of a plurality of metals therefrom; and metal oxides doped with nitrogen or a metal ion. Other examples include metal oxides on a surface of which a co-catalyst, such as a metal or a metal salt, is carried. Further examples include metal oxides having a surface on which a photosensitization dye or the like is carried.

An ion exchanger carrying a metal ion will be described.

Examples of the metal ion include silver ion, copper ion (II), and zinc ion. Examples of the ion exchanger include silicate carriers, such as zeolite (crystalline aluminosilicate), silica gel, and clay minerals; phosphate-based carriers such as zirconium phosphate and calcium phosphate; soluble glass; activated charcoal; metal carriers; and organic metals.

A metal ion may be carried on the ion exchanger by the following method, for example. First, the ion exchanger is immersed in an aqueous solution of the metal ion under a predetermined pH condition at a predetermined temperature for a predetermined time, thereby substituting some or all of ion-exchangeable ions in the ion exchanger with the metal ion. After completion of the ion exchange, the ion exchanger is washed with water and dried by heating.

The composition of antibacterial ceramics is expressed by Ag-Cau Znv Alw (PO4)X (OH) Y. Examples of crystalline antibacterial ceramics include silver zirconium phosphate, silver tripolyphosphate aluminum, silver hydroxyapatite, and silver phosphate tricalcium. Examples of non-crystalline antibacterial ceramics include silver phosphate glass and silver phosphate double salt ceramics.

As the inorganic antiviral agent, a powder with a particle size of 1 nm to 400 nm (nanometers) is used. As the titanium oxide, a powder with a particle size of 1 nm to 400 nm is used. As the cuprous oxide (copper oxide (I): $Cu_2O$), a powder with a particle size of 1 nm to 400 nm is used.

Among the inorganic antiviral agents, titanium oxide is preferable. Rutile-type titanium oxide decreases transparency. Accordingly, anatase type is more preferable.

Even more preferably, cuprous oxide (copper oxide (I): $Cu_2O$) is mixed in titanium oxide. As the cuprous oxide, preferably, a powder which is surface-treated for oxidation resistance is used.

The mixing ratio of titanium oxide and cuprous oxide is preferably 45 : 55 to 75 : 25 (parts by weight). This is because if the titanium oxide ratio is greater than 75 parts by weight, antiviral property is insufficient. Also, if the cuprous oxide ratio is greater than 55 parts by weight, the haze value (% value) is increased.

The amount of inorganic antiviral agent is preferably not less than 0.01 g and not more than 0.03 g per 1 $m^2$ (square meters) area of the antiviral transfer sheet. This is so that antiviral property can be exerted, and the total light transmittance can be in a practical range. The 1 $m^2$ area of the antiviral transfer sheet is equal to the 1 $m^2$ area of the functional layer.

When a mixture of titanium oxide and cuprous oxide is used as the inorganic antiviral agent, the amount of the mixture is preferably not less than 0.01 g and not more than 0.03 g per 1 $m^2$ area of the antiviral transfer sheet. This is because if less than 0.01 $g/m^2$, antiviral property is insufficient. If greater than 0.03 $g/m^2$, the total light transmittance becomes less than 88%.

<Hard coat agent>

The hard coat agent is an active energy-ray curable resin that is curable with ultraviolet ray, electron beam and the like, as represented by a photo-curable resin such as ultraviolet ray curable resin, or a radiation curable resin such as electron beam curable resin. The hard coat agent may be a thermally curable and active energy-ray curable resin. Examples of the active energy-ray curable resin include urethane acrylate resins and cyanoacrylate resins. An example of the thermally curable and active energy-ray curable resin is a resin obtained by adding an additive such as isocyanate into urethane acrylate resin or cyanoacrylate resin. By heating the thermally curable and active energy-ray curable resin, some of the monomers or oligomers in the resin are cross-linked, whereby the resin is half-cured. The half-cured hard coat layer becomes cured by being irradiated with active energy ray such as ultraviolet ray.

When a thermally curable and active energy-ray curable hard coat agent is used commonly in the antiviral transfer sheet manufacturing method according to the present invention and the antiviral shrink film manufacturing method according to the present invention, heating may be performed for half-curing and then active energy ray irradiation may be performed for full-curing. When an active energy-ray curable hard coat agent is used, a small amount of active energy ray irradiation may be performed for half-curing, and then active energy ray irradiation may be again performed for full-curing.

Among the hard coat agents, an ultraviolet ray curable resin and a thermally curable and ultraviolet ray curable resin are preferable. This is because of easy access to inexpensive equipment (tools) for the curing operation, ease of curing operation. This is also because, from the viewpoint of the transfer sheet, transferred item, and shrink film 1, of high transparency of the functional layer and easy penetration of ultraviolet ray.

The hard coat agent in the transfer sheet manufactured by the manufacturing method of the present invention may be cured at any stage of the manufacturing process. That is, the hard coat agent may be cured in any of the following stages (1) to (3).

(1) After formation of the functional layer during manufacture of the transfer sheet
(2) After manufacture of the transfer sheet
(3) After transfer of the transfer layer of the transfer sheet onto the transferred item 21

Preferably, curing is performed after the press-heat transfer processing, i.e., stage (3). More preferably, half-curing is performed in stage (1) and full-curing is performed in stage (3).

In the antiviral shrink film manufacturing method according to the present invention, the hard coat agent may be cured in any manufacturing stage. That is, the hard coat agent may be cured in any of the following stages (1) to (4).

(1) After formation of the functional layer during manufacture of the transfer sheet
(2) After manufacture of the transfer sheet
(3) After manufacture of the shrink film
(4) After the shrink film is shrunk and mounted on the mounted body

Preferably, curing is performed after the press-heat transfer processing, i.e., in stage (3) or (4). More preferably, half-curing is performed in stage (1), and full-curing is performed in stage (3) or (4).

<Base material sheet>

As the material of the base material sheet, materials having releasable property as a base material sheet may be used. Examples include resin sheets of polypropylene resin, polyethylene resin, polyamide resin, polyester resin, acrylic resin, and polyvinyl chloride resin; metal foils such as aluminum foil and copper foil; cellulose sheets such as glassine paper, coated paper, and cellophane; and composite materials of the above sheets.

<Picture layer>

Among the material of the picture layer, resins such as polyvinyl resins, polyamide resin, polyacrylic resin, polyurethane resin, polyvinyl acetal resin, polyester urethane resin, cellulose ester resin, or alkyd resin may be used as a binder. A coloring ink containing an appropriate color of pigment or dye as a coloring agent may be used. For a metallic color, metal particles of aluminum, titanium, bronze and the like, or a pearl pigment obtained by coating mica with titanium oxide may be used. Examples of the method for forming the picture layer include printing processes such as offset printing, gravure printing, and screen printing.

The picture layer may be formed of a metal thin film of aluminum, tin, copper and the like. In this case, the forming method may include metal evaporation, sputtering, or ion beam method.

<Adhesive layer>

For the adhesive layer, a resin having appropriate thermosensitivity or pressure sensitivity for the type of the transferred item or shrink base material is used. For example, when the transferred base material is PC or polystyrene (PS) resin, the adhesive layer may use PMMA, PS, PA, or polyolefin resin having affinity with the PC or PS resin. For example, when the shrink base material is polystyrene (PS) resin, the adhesive layer may use PMMA, PS, PA, or polyolefin resin having affinity with the PS resin. Examples of the method for forming the adhesive layer include gravure coating, roll coating, comma coating, gravure printing, screen printing, and offset printing.

<Release layer>

As needed, a release layer may be formed between the base material sheet and the functional layer. The release layer is a layer that is removed from the transferred item or shrink film together with the base material sheet when the base material sheet is peeled after transfer. Examples of the material of the release layer include melamine resin-based mold release agent, silicone resin-based mold release agent, fluorine resin-based mold release agent, cellulose derivative-based mold release agent, urea resin-based mold release agent, polyolefin resin-based mold release agent, paraffin-based mold release agent, and composite mold release agent thereof. Examples of the method for forming the release layer include coating methods such as roll coating and spray coating; gravure printing; and screen printing.

<Shrink base material>

The shrink base material is manufactured by molding a resin or rubber, such as polyvinyl chloride, polyvinylidene chloride, polyethylene, ethylene -propylene copolymer, ionomer, polypropylene, polystyrene, polyester, fluorine resin, hydrochloride rubber, silicone rubber, EPDM, chloroprene rubber, and nitrile-butadiene rubber, into film shape. After the film is molded, normally the molded film is stretched in a single-axis direction or double-axis directions, and then thermally set. The stretching may be performed by stretch blow molding or stretch inflation molding under a temperature condition such that orientation is exerted, simultaneously with the molding of the film.

An embodiment of the present invention has been described with reference to the drawings. However, specific configuration examples are not limited to the embodiment.

Example 1

A transfer sheet was fabricated. Transfer was performed by in-mold injection molding. An antiviral molded article was prepared. The antiviral property, total light transmittance, and haze of the antiviral molded article were measured.

The transfer sheet manufacturing method and the like were as follows.

Base material sheet: PET film, thickness 50 $\mu$m (micrometers)

Antiviral agent: Mix powder of 60 parts by weight of $TiO_2$ powder and 40 parts by weight of $Cu_2O$ powder
$TiO_2$ powder (white powder) had a primary particle size of 15 nm. $Cu_2O$ powder (brownish-red powder) had a primary particle size of 50 nm.

Hard coat agent: Urethane acrylate-based ultraviolet ray cure resin

Molding resin: Acrylic resin
Molded article size: 50 mm $\times$ 50 mm $\times$ 1 mm
Molten resin temperature: 240°C to 260°C

Onto the base material sheet, a suspension including antiviral agent, methyl ethyl ketone, and a small amount of hard coat agent was applied by an amount such that the antiviral agent was 0.02 g/m$^2$. Then, methyl ethyl ketone was removed. From over the antiviral agent, the hard coat agent was applied in a layer shape having a dry thickness of 5.5 $\mu$m. Thereafter, an anchor agent was applied onto the half-cured hard coat agent. The adhesive layer was fabricated by gravure printing using polyolefin resin. Thereafter, ultraviolet ray irradiation was performed to cure the hard coat agent.

Between the sample numbers 8, 9, and 10 and 11, 12, and 13, the mixing ratio (parts by weight) of the $TiO_2$ powder and $Cu_2O$ powder added as the antiviral agent was changed.

The functional layer with sample number 1 was formed without adding the antiviral agent.

In the comparative example, the suspension was fabricated by mixing the antiviral agent and hard coat agent of the amounts indicated in a table in advance. The functional layer was formed by applying the suspension.

Antiviral property was evaluated in accordance with JIS R 1756 (visible light responsive photocatalyst viral testing method). As a light condition, illuminance was set at 1000lx by cutting ultraviolet rays of 400 nm or below included in the light of a white fluorescent lamp by means of a N113 filter.

The test was conducted by the following method. First, a sample with attached bacteriophage virus was optically irradiated for two hours. From the sample, virus was collected using a SCDLP solution. Escherichia coli infected with the virus that was appropriately diluted were applied to an agar medium. The number of colonies after cultivation was counted. Then, the inactivation degree was calculated for evaluation.

As the inactivation degree calculation formula, the following expression was used.

$$\text{(inactivation degree)} = \text{(logarithm of bacteriophage infectivity titer after test)} -$$

$$\text{(logarithm of initial bacteriophage infectivity titer)}$$

The total light transmittance measurement was performed in accordance with JIS K 7361 (method for testing total light transmittance of plastic-transparent materials). For the measurement, the NDH 5000 haze meter (from Nippon Denshoku Industries Co., Ltd) was used.

Haze measurement was performed in accordance with JIS K 7136 (method for determining haze of plastic-transparent materials). The measurement was performed using the NDH 5000 haze meter (from Nippon Denshoku Industries Co., Ltd).

Measurement results are shown in Table 1.

In the overall evaluation, antiviral property of -2.0 or below was evaluated as being acceptable. Total light transmittance of 88.0% or more was also evaluated as being acceptable. Haze of 3.0% or below was also evaluated as being acceptable.

[Table 1]

| Sample number | Amount of antiviral agent g/m2 | Titanium copper ratio | Antiviral property | Total light transmittance % | Haze % | Overall evaluation |
|---|---|---|---|---|---|---|
| 1 | 0 | None | -0.2 | 92.0 | 1.1 | Poor |
| 8 | 0.02 | 50/50 | -3.9 | 91.2 | 2.2 | Good |
| 9 | 0.02 | 60/40 | -2.2 | 91.3 | 2.3 | Good |
| 10 | 0.02 | 70/30 | -1.4 | 91.4 | 1.8 | Poor |
| 11 | 0.04 | 50/50 | -4.8> | 89.9 | 4.0 | Poor |
| 12 | 0.04 | 60/40 | -4.8> | 89.6 | 3.9 | Poor |
| 13 | 0.04 | 70/30 | -4.8> | 90.0 | 3.3 | Poor |
| Comparison-1 | 0.02 | 60/40 | -0.3 | 91.3 | 2.6 | Poor |
| Note 1: Titanium copper ratio indicates $TiO_2/Cu_2O$ (weight ratio). Note 2: The value "-4.8 >" of antiviral property indicates measurement limit. | | | | | | |

Sample numbers 8 and 9 provided the results indicating high antiviral property and large total light transmittance (%value). In Table 1, the antiviral property measurement value "-4.8 >" indicates that, because the antiviral property was not measurable in the actually performed experiment, the measurement value was determined to be not more than a measurement limit value of -4.8. The same applies to Table 4.

Example 2

Using the antiviral molded articles prepared in Example 1, the antibacterial property of the antiviral molded article was measured. The antiviral molded articles used for measurement included sample number 1 and sample number 9. In the paragraphs describing Example 2, the term "antibacterial property" literally means antibacterial property. The term "antibacterial property" does not mean antiviral property.

The antibacterial property measurement was performed in accordance with JIS-R-1756 (method for testing antiviral property of visible light responsive photocatalysts). As a light condition, illuminance was set to 10001x by cutting ultraviolet rays of 380 nm or below included in light of a white fluorescent lamp by means of an N169 filter.

The test was conducted by the following method. First, 50 µL (microliters) of the sample was irradiated with light for 24 hours while a bacterial liquid of Staphylococcus aureus was added dropwise thereto. From the sample, Staphylococcus aureus was collected using a SCDLP solution. The collected liquid was mixed in an NB medium. The number of colonies after cultivation was counted for evaluation.

As an antibacterial activity value calculation formula, the following expression was used.

$$\text{(antibacterial activity value)} = \text{(logarithm of Staphylococcus aureus in sample after test)} - \text{(logarithm of Staphylococcus aureus on glass plate after test)}$$

[Table 2]

| Sample number | Amount of antiviral agent g/m$^2$ | Titanium copper ratio | Antibacterial property | Evaluation |
|---|---|---|---|---|
| 1 | 0 | None | -0.7 | Poor |

(continued)

| Sample number | Amount of antiviral agent g/m² | Titanium copper ratio | Antibacterial property | Evaluation |
|---|---|---|---|---|
| 9 | 0.02 | 60/40 | -4.8> | Good |

Note 1: Titanium copper ratio indicates $TiO_2/Cu_2O$ (weight ratio).
Note 2: The value "-4.8 >" of antiviral property indicates measurement limit.

In Table 2, the antibacterial property measurement value "-4.8 >" indicates that, because the antibacterial property was not measurable in the actually performed experiment, the measurement value was determined to be not more than a measurement limit value of -4.8. The same applies to Table 5.

Example 3

The antiviral shrink film 1 was fabricated by fabricating the transfer sheet 11, analyzing the transfer condition, and performing transfer onto the shrink base material. The shrink-processability of the film was evaluated.
The manufacturing method and the like of the transfer sheet were as follows.
Base material sheet: PET film, thickness 50 $\mu$m

Antiviral agent: Mixed powder of 60 parts by weight of $TiO_2$ powder and 40 parts by weight of $Cu_2O$ powder
The $TiO_2$ powder (white powder) had a primary particle size of 15 nm. The $Cu_2O$ powder (brownish-red powder) had a primary particle size of 50 nm.

The shrink base material was a dual-axis stretched polystyrene sheet having a thickness of 60 $\mu$m, and exhibited, upon heating at 100°C for 10 seconds, a thermal shrinkage in the MD direction of 14% and a thermal shrinkage in the TD direction of 75%. The thermal shrinkage was determined according to the following expression.

$$\text{Thermal shrinkage (\%)} = 100 \times (\text{pre-heating length - post-heating length}) / \text{pre-heating length}$$

Hard coat agent: Urethane acrylate-based ultraviolet ray cure resin

Onto the base material sheet, a suspension including antiviral agent, methyl ethyl ketone, and a small amount of hard coat agent was applied by an amount such that the antiviral agent was 0.02 g/m². Then, methyl ethyl ketone was removed. From over the antiviral agent, the hard coat agent was applied in a layer shape having a dry thickness of 5.5 $\mu$m. Thereafter, an anchor agent was applied onto the half-cured hard coat agent. The adhesive layer was fabricated by gravure printing using polyolefin resin. Thereafter, ultraviolet ray irradiation was performed to cure the hard coat agent.
The transfer was performed by applying pressure and heat using a press-heat roll from above the shrink base material and transfer film placed overlapping with each other on a stage. The temperature of the press-heat roll was 186°C.
The transfer degree was measured by changing the movement speed, pressure, and number of times of press-heat application (number of times of passage between the stage and the roll) of the press-heat roll. The transfer degree was measured in percentage through visual observation of the degree of the transfer layer region present on the antiviral shrink film after the base material sheet had been removed.
The completed antiviral shrink film was wound on a door knob. The antiviral shrink film was heated at 170°C for 2 minutes to perform shrink processing. The processability of the antiviral shrink film was evaluated visually in terms of either OK (good) or not OK (poor).
Table 3 shows the experiment results of transfer condition analysis and shrink-processability.

[Table 3]

| Sample number | Transfer speed m/min | Number of times of transfer | Pressure Mpa | Transfer degree % | Processability |
|---|---|---|---|---|---|
| 21 | 2.1 | 1 | 0.55 | 100 | Good |
| 22 | 2.1 | 2 | 0.55 | 100 | Poor |
| 23 | 2.1 | 3 | 0.55 | 100 | Poor |

(continued)

| Sample number | Transfer speed m/min | Number of times of transfer | Pressure Mpa | Transfer degree % | Processability |
|---|---|---|---|---|---|
| 24 | 2.1 | 5 | 0.55 | 100 | Poor |
| 25 | 3.4 | 1 | 0.55 | 100 | Good |
| 26 | 3.4 | 1 | 0.26 | 70 | Good |
| 27 | 3.4 | 1 | 0.37 | 100 | Good |
| 28 | 3.4 | 1 | 0.77 | 100 | Good |
| 29 | 4.7 | 1 | 0.55 | 5 | Good |
| 30 | 9.9 | 1 | 0.55 | 0 | Good |
| Note 1: Transfer degree of 0% indicates absence of transfer. | | | | | |

Even when the transfer processing involving the application of press-heat was performed, shrink-processability was good. As the number of times of transfer was increased, shrink-processability decreased.

Example 4

The antiviral shrink film 1 was fabricated by fabricating the transfer sheet 11 and performing transfer onto the shrink base material. The antiviral property, total light transmittance, and haze of the antiviral shrink film were measured.
The base material sheet, $TiO_2$ powder and $Cu_2O$ powder of the antiviral agent, hard coat agent, and adhesive used in Example 4 were the same as those used in Example 1.
Between sample numbers 8, 9, 10, 11, 12, and 13, the mixing ratio (parts by weight) of the $TiO_2$ powder and $Cu_2O$ powder added as the antiviral agent was changed.
With regard to the transfer condition, the press-heat roll temperature was 186°C, pressure was 0.55 Mpa, and transfer speed was 3.4 m/min.
The functional layer of sample number 1 was formed without adding the antiviral agent.
The functional layer of comparison-1 was formed by applying a suspension prepared by mixing in advance the antiviral agent and hard coat agent of the amounts indicated in the table.
The methods of evaluation of antiviral property and testing, inactivity degree calculation formula, total light transmittance measurement, and haze measurement were the same as those of Example 1.
The measure results are shown in Table 4.
For comprehensive evaluation, antiviral property of -2.0 or below was evaluated as being acceptable. Total light transmittance of 88.0% or above was evaluated as being acceptable. Haze was not considered in the comprehensive evaluation.

[Table 4]

| Sample number | Amount of antiviral agent g/m2 | Titanium copper ratio | Antiviral property | Total light transmittance % | Haze % | Overall evaluation |
|---|---|---|---|---|---|---|
| 1 | 0 | None | -0.2 | 89.8 | 2.8 | Poor |
| 8 | 0.02 | 50/50 | -3.8 | 89.1 | 5.7 | Good |
| 9 | 0.02 | 60/40 | -2.5 | 89.1 | 5.9 | Good |
| 10 | 0.02 | 70/30 | -1.5 | 89.2 | 4.6 | Poor |
| 11 | 0.04 | 50/50 | -4.8> | 87.8 | 10.3 | Poor |
| 12 | 0.04 | 60/40 | -4.8> | 87.5 | 10.0 | Poor |
| 13 | 0.04 | 70/30 | -4.8> | 87.9 | 8.5 | Poor |

(continued)

| Sample number | Amount of antiviral agent g/m2 | Titanium copper ratio | Antiviral property | Total light transmittance % | Haze % | Overall evaluation |
|---|---|---|---|---|---|---|
| Comparison-1 | 0.02 | 60/40 | -0.3 | 89.1 | 6.7 | Poor |
| Note 1: Titanium copper ratio indicates $TiO_2/Cu_2O$ (weight ratio). Note 2: The value "-4.8 >" of antiviral property indicates measurement limit. | | | | | | |

For sample numbers 8 and 9, the results indicating high antiviral property and large total light transmittance (%value) were obtained.

Example 5

Using the antiviral shrink film 1 prepared in Example 4, the antibacterial property of the antiviral shrink film 1 was measured. The antiviral shrink film 1 used for measurement included sample number 1 and sample number 9. In the paragraphs describing Example 5, the term "antibacterial property" literally means antibacterial property. The term "antibacterial property" does not mean antiviral property.

Antibacterial property measurement and testing methods, and antibacterial activity value calculation formula were the same as those of Example 2.

[Table 5]

| Sample number | Amount of antiviral agent g/m$^2$ | Titanium copper ratio | Antibacterial property | Evaluation |
|---|---|---|---|---|
| 1 | 0 | None | -0.6 | Poor |
| 9 | 0.02 | 60/40 | -4.8> | Good |
| Note 1: Titanium copper ratio indicates $TiO_2/Cu_2O$ (weight ratio). Note 2: The value "-4.8 >" of antiviral property indicates measurement limit. | | | | |

LIST OF REFERENCE NUMERALS

1    Antiviral shrink film
11    Antiviral transfer sheet
21    Transferred base material
22    Transferred item
26    Shrink base material
31    Base material sheet
32    Transfer layer
33    Antiviral agent powder
34    Hard coat agent
35    Functional layer boundary surface
37    Functional layer
38    Picture layer
39    Adhesive layer
40    Boundary surface
41    Exposed surface
44    Base material laminated body
45    Base material transfer body
51    Press-heat roll
52    Backing roll
61    Surface (of base material sheet)
62    Exposed surface

**Claims**

1. An antiviral transfer sheet (11) manufacturing method, comprising:

forming a functional layer (37) including an inorganic antiviral agent powder (33) and a hard coat agent (34) on a base material sheet (31), wherein the hard coat agent (34) is an active energy-ray curable resin or a thermally curable and active energy-ray curable resin, wherein
the functional layer (37) has a boundary surface (35) in contact with the base material sheet (31),
among the individual particles of the inorganic antiviral agent powder (33), the particles of which a part of the particle surface is in contact with the boundary surface (35) are contact-effective powder particles,
each contact-effective powder particle has an independent contact area in contact with the boundary surface (35),
a total value of the independent contact areas of the contact-effective powder particles present in a certain section of the boundary surface (35) is a total contact area, and
a percentage of the total contact area with respect to an area of the certain section is a contact-effective powder-occupied percentage, the contact-effective powder-occupied percentage being determined as described in the description,
**characterized in that**
forming the functional layer (37) comprises:

disposing the inorganic antiviral agent powder (33) on one surface of the base material sheet (31) such that the contact-effective powder-occupied percentage is not less than 50% and not more than 80%, wherein the inorganic antiviral agent powder (33) is disposed by applying a suspension of organic solvent containing the inorganic antiviral agent powder (33), and later removing the organic solvent, and
positioning the hard coat agent (34) from over the inorganic antiviral agent powder (33) in layer shape, wherein

an adhesive layer (39) is formed on the functional layer (37), in contact with the functional layer (37) or via another layer,
the inorganic antiviral agent powder (33) has an amount of not less than 0.01 g and not more than 0.03 g per 1 m$^2$ of the antiviral transfer sheet (11).

2. The antiviral transfer sheet (11) manufacturing method according to claim 1, wherein the inorganic antiviral agent powder (33) includes a mixture of a titanium oxide powder and a cuprous oxide (copper oxide (I): Cu$_2$O) powder.

3. The antiviral transfer sheet (11) manufacturing method according to claim 1 or 2, comprising:

after the functional layer (37) is formed, forming a picture layer (38) on the functional layer (37); and
forming the adhesive layer (39) on the picture layer (38).

4. An antiviral shrink film (1) manufacturing method comprising:

preparing an antiviral transfer sheet (11) according to the antiviral transfer sheet (11) manufacturing method of any one of claims 1 to 3,
preparing a base material laminated body (44) by laminating the antiviral transfer sheet (11) on a shrink base material (26);
preparing, by applying pressure and heat to the base material laminated body (44), a base material transfer body (45) including a transfer layer (32) transferred onto the shrink base material (26); and
obtaining an antiviral shrink film (1) by removing the base material sheet (31) from the base material transfer body (45).

5. The antiviral shrink film (1) manufacturing method according to claim 4, wherein the pressure applied to the laminate is 0.3 MPa to 1.2 MPa, and the heat applied to the laminate is 170°C to 210°C.

**Patentansprüche**

1. Verfahren zur Herstellung einer Antivirale-Übertragung-Lage (11), wobei das Verfahren folgende Schritten aufweist:

Bilden einer funktionalen Schicht (37), die ein Anorganisches-Antivirales-Mittel-Pulver (33) und ein Hartbeschichtungsmittel (34) auf einer Basismateriallage (31) umfasst, wobei das Hartbeschichtungsmittel (34) ein Harz ist, das durch Aktive-Energie-Bestrahlung härtbar ist oder ein Harz ist, das wärmehärtbar und durch Aktive-Energie-Bestrahlung härtbar ist, wobei

die funktionale Schicht (37) eine Grenzoberfläche (35) aufweist, die in Kontakt mit der Basismateriallage (31) ist, unter den individuellen Partikeln des Anorganisches-Antivirales-Mittel-Pulvers (33) die Partikel, von denen ein Teil der Partikeloberfläche mit der Grenzoberfläche (35) in Kontakt ist, kontaktwirksame Pulverpartikel sind, jedes kontaktwirksame Pulverpartikel einen unabhängigen Kontaktbereich in Kontakt mit der Grenzoberfläche (35) aufweist,

ein Gesamtwert der unabhängigen Kontaktbereiche der kontaktwirksamen Pulverpartikel, die in einem gewissen Abschnitt der Grenzoberfläche (35) vorhanden sind, ein Gesamtkontaktbereich ist, und

ein Prozentanteil des Gesamtkontaktbereichs hinsichtlich eines Bereichs des gewissen Abschnitts ein kontaktwirksamer pulverbesetzter Prozentanteil ist, wobei der kontaktwirksame pulverbesetzte Prozentanteil wie in der Beschreibung beschrieben bestimmt ist,

**dadurch gekennzeichnet, dass**

das Bilden der funktionalen Schicht (37) folgende Schritte aufweist:

Anordnen des Anorganisches-Antivirales-Mittel-Pulvers (33) auf einer Oberfläche der Basismateriallage (31) derart, dass der kontaktwirksame pulverbesetzte Prozentanteil nicht weniger als 50 % und nicht mehr als 80 % beträgt, wobei das Anorganisches-Antivirales-Mittel-Pulver (33) durch Auftragen einer Suspension eines organischen Lösungsmittels, das das Anorganisches-Antivirales-Mittel-Pulver (33) enthält, und später Entfernen des anorganischen Lösungsmittels angeordnet ist, und

Positionieren des Hartbeschichtungsmittels (34) von über dem Anorganisches-Antivirales-Mittel-Pulver (33) in einer Schichtform, wobei

eine Haftschicht (39) auf der funktionalen Schicht (37) in Kontakt mit der funktionalen Schicht (37) oder durch eine andere Schicht gebildet ist,

das Anorganisches-Antivirales-Mittel-Pulver (33) einen Betrag von nicht weniger als 0,01 g und nicht mehr als 0,03 g pro 1 $m^2$ der Antivirale-Übertragung-Lage (11) aufweist.

2. Das Verfahren zur Herstellung einer Antivirale-Übertragung-Lage (11) gemäß Anspruch 1, bei dem das Anorganisches-Antivirales-Mittel-Pulver (33) eine Mischung aus einem Titanoxidpulver und einem Kupfer(I)-oxid(Kupferoxid (I): $Cu_2O$)-Pulver umfasst.

3. Das Verfahren zur Herstellung einer Antivirale-Übertragung-Lage (11) gemäß Anspruch 1 oder 2, das folgende Schritte aufweist:

nachdem die funktionale Schicht (37) gebildet ist, Bilden einer Bildschicht (38) auf der funktionalen Schicht; und Bilden der Haftschicht (39) auf der Bildschicht (38).

4. Ein Verfahren zur Herstellung einer antiviralen Schrumpffolie (1), das folgende Schritte aufweist:

Vorbereiten einer Antivirale-Übertragung-Lage (11) gemäß dem Verfahren zur Herstellung einer Antivirale-Übertragung-Lage (11) gemäß einem der Ansprüche 1 bis 3,

Vorbereiten eines Basismaterial-laminierten Körpers (44) durch Laminieren der Antiviralen-Übertragung-Lage (11) auf einem Schrumpfbasismaterial (26);

Vorbereiten, durch Anlegen von Druck und Hitze an den Basismaterial-laminierten Körper (44), eines Basismaterial-Übertragung-Körpers (45) einschließlich einer Übertragungsschicht (32), die auf das Schrumpfbasismaterial (26) übertragen wird; und

Erhalten einer antiviralen Schrumpffolie (1) durch Entfernen der Basismateriallage (31) von dem Basismaterial-Übertragung-Körper (45).

5. Das Verfahren zur Herstellung der antiviralen Schrumpffolie (1) gemäß Anspruch 4, bei dem der Druck, der an das Laminat angelegt wird, 0,3 MPa bis 1,2 MPa beträgt, und die Hitze, die an das Laminat angelegt wird, 170° C bis 210° C beträgt.

**Revendications**

1.  Procédé de fabrication d'une feuille de transfert antivirale (11), comprenant le fait de:

    former une couche fonctionnelle (37) comportant une poudre d'agent antiviral inorganique (33) et un agent de revêtement dur (34) sur une feuille de matériau de base (31), où l'agent de revêtement dur (34) est une résine durcissable par rayonnement d'énergie active ou une résine thermodurcissable et durcissable par un rayonnement d'énergie active,
    dans lequel
    la couche fonctionnelle (37) présente une surface limite (35) en contact avec la feuille de matériau de base (31), parmi les particules individuelles de la poudre d'agent antiviral inorganique (33), les particules dont une partie de la surface de particules est en contact avec la surface limite (35) sont des particules de poudre à effet de contact,
    chaque particule de poudre à effet de contact présente une zone de contact indépendante en contact avec la surface limite (35),
    une valeur totale des surfaces de contact indépendantes des particules de poudre à effet de contact présentes dans un certain segment de la surface limite (35) est une surface de contact totale, et
    un pourcentage de la zone de contact totale par rapport à une zone du certain segment est un pourcentage d'occupation de poudre à effet de contact, le pourcentage d'occupation de poudre à effet de contact étant déterminé comme décrit dans la description,
    **caractérisé en ce que**
    la formation de la couche fonctionnelle (37) comprend le fait de:

      disposer la poudre d'agent antiviral inorganique (33) sur une surface de la feuille de matériau de base (31) de sorte que le pourcentage d'occupation de poudre à effet de contact ne soit pas inférieur à 50 % et pas supérieur à 80 %, où la poudre d'agent antiviral inorganique (33) est disposée en appliquant une suspension de solvant organique contenant la poudre d'agent antiviral inorganique (33), et en éliminant ensuite le solvant organique, et
      positionner l'agent de revêtement dur (34) au-dessus de la poudre d'agent antiviral inorganique (33) en forme de couche, dans lequel

    une couche adhésive (39) est formée sur la couche fonctionnelle (37), en contact avec la couche fonctionnelle (37) ou par l'intermédiaire d'une autre couche,
    la poudre d'agent antiviral inorganique (33) présente une quantité de pas moins de 0,01 g et de pas plus de 0,03 g par 1 m$^2$ de la feuille de transfert antivirale (11).

2.  Procédé de fabrication d'une feuille de transfert antivirale (11) selon la revendication 1,
    dans lequel la poudre d'agent antiviral inorganique (33) comporte un mélange d'une poudre d'oxyde de titane et d'une poudre d'oxyde cuivreux (oxyde de cuivre (I): $Cu_2O$).

3.  Procédé de fabrication d'une feuille de transfert antivirale (11) selon la revendication 1 ou 2, comprenant le fait de:

    après que soit formée la couche fonctionnelle (37), former une couche d'image (38) sur la couche fonctionnelle (37); et
    former la couche adhésive (39) sur la couche d'image (38).

4.  Procédé de fabrication d'un film rétractable antiviral (1) comprenant le fait de:

    préparer une feuille de transfert antivirale (11) selon le procédé de fabrication d'une feuille de transfert antivirale (11) selon l'une quelconque des revendications 1 à 3,
    préparer un corps stratifié de matériau de base (44) en stratifiant la feuille de transfert antivirale (11) sur un matériau de base rétractable (26);
    préparer, en appliquant de la pression et de la chaleur au corps stratifié de matériau de base (44), un corps de transfert de matériau de base (45) comportant une couche de transfert (32) transférée sur le matériau de base rétractable (26); et
    obtenir un film rétractable antiviral (1) en éliminant la feuille de matériau de base (31) du corps de transfert de matériau de base (45).

**5.** Procédé de fabrication d'un film rétractable antiviral (1) selon la revendication 4, dans lequel la pression appliquée au stratifié est de 0,3 MPa à 1,2 MPa, et la chaleur appliquée au stratifié est de 170°C à 210°C.

*FIG. 1*

*FIG. 2*

*FIG. 3*

# FIG. 4

**EP 3 202 552 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012158116 A
- JP 10330507 A
- JP 9021255 A
- JP H09316369 A
- WO 2014141600 A1
- WO 2011040048 A1